# EUROPÄISCHE PATENTSCHRIFT

(11) **EP 2 025 575 B1**
(45) Veröffentlichungstag und Bekanntmachung des Hinweises auf die Patenterteilung: **18.09.2013**
(21) Anmeldenummer: 08162128.6
(22) Anmeldetag: 09.08.2008
(51) Int. Cl.: B62B 5/00, B65D 1/22, B62B 1/00

(54) **Transportverpackung**
Transport packaging
Emballage de transport

(30) Priorität: 09.08.2007 AT 48307 U
(43) Veröffentlichungstag der Anmeldung: 18.02.2009
(73) Patentinhaber: Bergfreund Handels-GmbH, 9535 Schiefling am Wörthersee (AT)
(72) Erfinder: Hauser-Gracher, Helga, 9535 Schiefling am See (AT); Gracher, Kurt, 9535 Schiefling am See (AT)
(74) Vertreter: Wirnsberger, Gernot

(56) Entgegenhaltungen:
- EP-A1- 1 327 586
- WO-A1-2006/096057
- DE-A1- 19 951 792
- DE-U1- 9 213 090
- DE-U1- 29 907 146
- FR-A1- 2 741 852
- US-A- 3 427 040

## Beschreibung

Die Erfindung betrifft eine leichtgewichtige Transportverpackung, zum Beispiel für mehrere, gegebenenfalls bereits zusammen verpackte Flüssigkeitsbehälter oder eine oder mehrere Sammeleinheiten, in welchen sich die Flüssigkeitsbehälter befinden, beispielsweise Bierkisten. Eine solche Verpackung ist aus der DE29907146U bekannt.

Für die Lagerung und zum Transport von Flüssigkeitsbehältern, insbesondere Getränkebehältern wie Flaschen, Dosen, Tetrapaks oder dergleichen, werden zumeist größere Sammeleinheiten wie Kisten oder Steigen verwendet oder, im Fall von Tetrapaks und Mineralwasserflaschen aus Kunststoff, auch Schrumpffolienverpackungen eingesetzt, die mehrere Tetrapaks bzw. Mineralwasserflaschen umschließen.

Die befüllten Sammeleinheiten bzw. zusammen verpackten Tetrapaks oder Mineralwasserflaschen, die in dieser Form auch im Handel angeboten werden, weisen ein erhebliches Gewicht auf. Entscheidet sich ein Konsument beispielsweise zum Kauf von drei Bierkisten, so kann er diese gleichzeitig kaum heben und nur mit großer Mühe transportieren. Aus Verkäufersicht weisen viele Sammeleinheiten wie Bierkisten außerdem den Nachteil einer flächenmäßig beschränkten Werbefläche auf.

Hier setzt die Erfindung an und stellt sich die Aufgabe, eine Transportverpackung der eingangs genannten Art anzugeben, mit welcher mehrere Flüssigkeitsbehälter oder Sammeleinheiten hierfür, gegebenenfalls auch andere Gegenstände, mit geringem Kraftaufwand bewegt werden können und welche die Möglichkeit bietet, die im Inneren befindlichen Produkte wirksam zu bewerben.

Diese Aufgabe wird erfindungsgemäß durch die Merkmale des Anspruchs 1 gelöst.

Mit der erfindungsgemäßen Lösung wird eine leichtgewichtige Transportverpackung bereitgestellt, die aufgrund der vorgesehenen Roll- oder Gleitelemente ohne großen Kraftaufwand bewegbar ist. Dazu ist es lediglich erforderlich, den Behälter leicht zu kippen und über die bevorzugt als Räder ausgebildeten Roll- oder Gleitelemente zu verfahren. Ein Heben der Flüssigkeitsbehälter erübrigt sich daher grundsätzlich und es können auch große Lasten, beispielsweise drei oder mehr Bierkisten, auf einfache Weise transportiert werden. Die Seitenwände dienen einem sicheren Halten des Inhalts insbesondere beim Transport und können für Werbezwecke genutzt werden.

Eines geringen Gewichtes und einer Wiederverwertung wegen ist es bevorzugt, wenn die Seitenwände des Behälters ausschließlich aus Karton bestehen. Bei Einsatz eines Kartons mit einem Gewicht von 280 g/m² bis 450 g/m² kann bei leichtgewichtiger Ausbildung der Transportverpackung die erforderliche Festigkeit der Seitenwände erreicht werden. Der Karton kann zum Schutz gegen Spritzwasser außenseitig lackiert oder beschichtet sein. Möglich ist es auch, zumindest die Seitenwände mit Zellophan zu umwickeln.

Der Boden, der im stehenden Zustand der Transportverpackung die größte Last trägt, besteht bevorzugt aus Pappe und weist dann ein Gewicht von mehr als 600 g/m² auf. Alternativ kann der Boden auch aus einem Karton, insbesondere einem Karton mit einem Gewicht von weniger als 450 g/m², bestehen und mit einem Kunststoffrahmen und/oder Verstrebungen aus Kunststoff verstärkt sein.

Erfindungsgemäß ist es, dass die Seitenwände und der Boden aus doppelwandigen Kunststoffstücken gebildet sind, wobei zwischen Wänden der Kunststoffstücke und senkrecht zu diesen Stege verlaufen. Doppelwandige Kunststoffstücke mit zwischen den Wänden verlaufenden Stegen bzw. Rippen weisen einerseits auch bei einem geringen Gewicht von bis zu 900 g/m² eine gute Steifigkeit auf, lassen sich aber andererseits insbesondere bei vorgegebener Perforierung leicht falten, sodass ein Behälter bei Bedarf rasch aus einem ebenen Teil hergestellt werden kann. Darüber hinaus sind entsprechende Materialien auch im Wesentlichen inert gegen Feuchtigkeitseinflüsse und weisen eine hohe Reißfestigkeit auf.

Wenn die Seitenwände und der Boden des Behälters aus einem leichtgewichtigen Material wie Karton und/oder Pappe oder einem doppelwandigen Kunststoffstück mit dazwischen verlaufen Streben bestehen, ist es besonders bevorzugt, dass die Roll- oder Gleitelemente an einer gemeinsamen Achse befestigt sind, die in vorteilhafter Weise im oder am Boden gelagert ist. Die Achse nimmt beim Transportieren einen großen Teil des Gewichtes auf, wodurch der Boden geschont wird. Die Achse, die im oder am Boden gelagert ist, ist bevorzugt länger als 75 % einer Breite des Behälters. Wenn Räder vorgesehen sind, kann die Achse drehfest im Boden angeordnet und mit seitlichen Ösen, die vorzugsweise wie die Achse aus einem Metall bzw. einer Legierung wie Stahl bestehen, am Karton oder Kunststoff befestigt sein, was zu einer guten Haltbarkeit der Transportverpackung insgesamt beiträgt. In diesem Fall werden die Räder, die zweckmäßigerweise aus einem Kunststoff bestehen, an der Achse zum Beispiel aufgesteckt, sodass sich die Räder relativ zur Achse drehen können. Hierfür können im Inneren der Achse Ausnehmungen vorgesehen sein, in welche die Räder mit korrespondierenden seitlichen Vorsprüngen beim Aufstecken ohne Verlust der Drehbarkeit einschnappen. Alternativ kann auch vorgesehen sein, dass die Achse drehbar gelagert ist und sich die Räder gleichzeitig mit der Achse drehen. In diesem Fall sollte jedoch im Boden zusätzlich eine Lagerschale für die Achse vorgesehen sein, damit der Karton bzw. Kunststoff bei längerem Gebrauch nicht Schaden erleidet.

Zweckmäßig ist es auch, insbesondere in Bezug auf eine große Stabilität der Transportverpackung im Gebrauch, dass die Seitenwände und der Boden des Behälters einteilig ausgebildet sind.

Der Boden ist zum Behälterinnern hin waagrecht ausgebildet, kann jedoch zum Untergrund hin schräg verlaufen und mit einer der Seitenwände eine Kante bilden, sodass eine Höhe der als Räder ausgebildeten und am der Kante gegenüberliegenden Ende des Bodens befestigten Roll- oder Gleitelemente ausgeglichen ist und der Behälter waagrecht steht. Alternativ ist es auch möglich, dass der Boden zum Behälterinneren und zum Grund hin waagrecht verläuft und am Boden den in Form von Rädern ausgebildeten Roll- oder Gleitelementen gegenüberliegend ein oder mehrere Distanzstücke vorgesehen sind, welche eine Höhe der Räder ausgleichen, sodass der Behälter waagrecht steht.

Für eine leichtgewichtige Ausbildung der Seitenwände eignet sich neben Karton auch Kunststoff in der Form eines Vollmaterials. In diesem Fall können die Seitenwände aus flächigen Elementen aus Kunststoff mit einer Stärke von 5 mm oder weniger gebildet sein. Auch der Boden kann vollständig aus Kunststoff gebildet sein, wenngleich eine Ausbildung der Seitenwände und des Bodens aus Karton bzw. Pappe oder den erwähnten doppelwandigen Kunststoffstücken im Hinblick auf ein geringes Gewicht bei guten Einsatzeigenschaften bevorzugt ist.

Damit die Transportverpackung nach Gebrauch platzsparend zum Produzenten zurückgeführt werden kann bzw. ein geringes Lagervolumen aufweist, kann vorgesehen sein, dass der Behälter zusammenfaltbar bzw. zusammenklappbar ist. Dabei ist es der Einfachheit wegen bevorzugt, dass der Behälter, der für die meisten Zwecke die Form eines Quaders aufweist, quer zu seiner Längsachse zusammenfaltbar bzw. zusammenklappbar ist.

Die vorgesehenen Roll- oder Gleitelemente sind in der Regel als Räder ausgebildet und auf derselben Seite des Behälters wie das Griffelement angeordnet.

Damit gegebenenfalls auch ein Heben der Transportverpackung auf einfache Weise möglich ist, können zusätzlich in den Seitenwänden Grifföffnungen vorgesehen sein.

Um den Konsumenten bzw. Käufern einen Blick auf den Inhalt der Transportverpackung zu ermöglichen, können überdies in den Seitenwänden Sichtfenster vorgesehen sein.

An der Kopfseite weist die Transportverpackung zum Schutz ihres Inhaltes einen aufklappbaren oder abnehmbaren Deckel auf.

Der Behälter kann kopfseitig horizontal abschließend ausgebildet sein. Möglich ist es aber auch, dass der Behälter kopfseitig abgeschrägt ausgebildet ist, wobei eine abfallende Schräge vom Bereich des Griffelementes zur gegenüberliegenden Seite vorliegt. Dies erlaubt es, Gegenstände, die sich in Bodennähe befinden, beim Entladen leichter händisch zu fassen. Diesbezüglich kann vorgesehen sein, dass der Behälter auf der Seite des Griffelementes eine Höhe von ca. 80 bis 120 cm aufweist und zur gegenüberliegenden Seite auf eine Höhe von 55 bis 75 cm abfällt.

Weitere Vorteile und bevorzugte Ausführungsvarianten ergeben sich aus der folgenden Beschreibung von Ausführungsbeispielen. In den Zeichnungen, auf die dabei Bezug genommen wird, zeigen:
Fig. 1 eine seitliche Ansicht einer erfindungsgemäßen Transportverpackung;
Fig. 2 eine teilweise querschnittliche Darstellung der in Fig. 1 gezeigten Transportverpackung bei Drehung um 90°;
Fig. 3 eine Draufsicht auf die in Fig. 1 dargestellte Transportverpackung;
Fig. 4 einen Teil eines ebenen Kunststoffstücks, das zu einem Behälter gefaltet werden kann;
Fig. 5 eine seitliche Ansicht eines Teils eines Behälters aus einem Kunststoffstück.

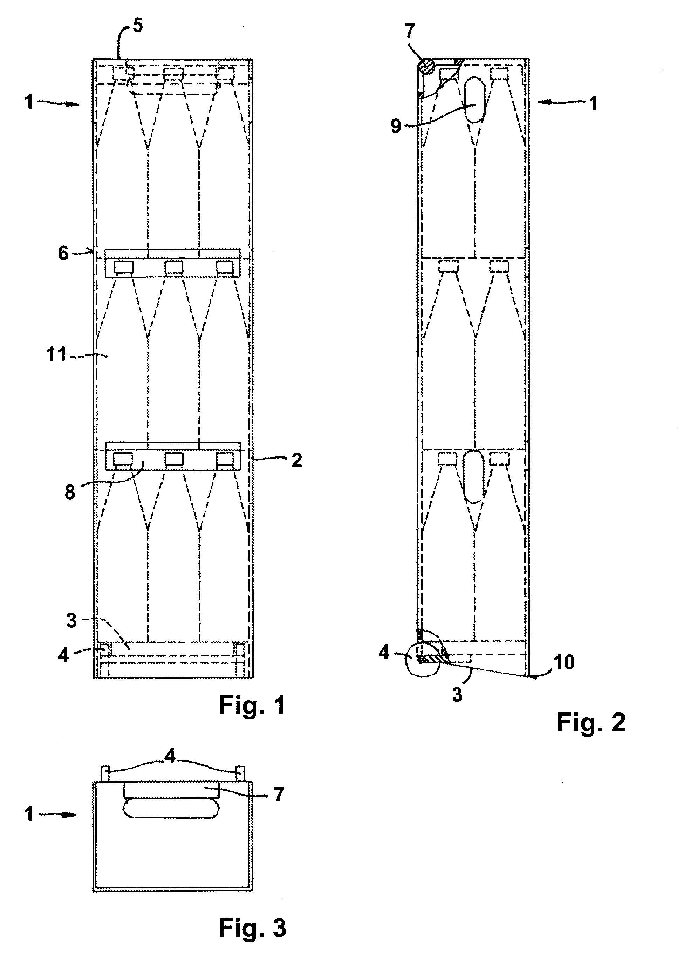

In Fig. 1 ist eine mögliche Ausführungsform einer erfindungsgemäßen Transportverpackung 1 dargestellt. Die Transportverpackung 1 umfasst einen länglichen quaderförmigen Behälter 2 mit einem Boden 3, vier an diesem anschließenden Seitenwänden 6 und einem Deckel 5. Am Boden 3 sind zwei als Räder ausgebildete Rollelemente 4 befestigt. Die Räder, die aus Kunststoff bestehen, sind über eine gemeinsame Achse aus Stahl miteinander verbunden, die im Boden 3 gelagert ist. Die Räder und die sie verbindende Achse können aber auch ausschließlich aus einem Kunststoff bestehen und sind dann vorzugsweise im Spritzguss gefertigt. Innerhalb des Behälters 2 befinden sich zahlreiche Flaschen 11, welche von außen teilweise durch Sichtfenster 8 erkennbar sind. Die Sichtfenster 8 können als bloße Durchbrechungen der Seitenwände 6 ausgebildet sein. Zum Schutz des Inneren der Transportverpackung 1 können diese Durchbrechungen mit einem transparenten Kunststoff abgedeckt sein, sofern die Transportverpackung 1 nicht ohnedies mit Zellophan umwickelt ist.

Wenngleich der Behälter 2 bei der in Fig. 1 gezeigten Ausführungsvariante für die Aufnahme einzelner Flaschen 11 ausgelegt ist, so können bei entsprechender Abwandlung der Maße des Behälters 2 auch Gebinde wie Bierkisten aufgenommen werden. Eine Anpassung der konkreten Maße erfolgt je nach Anwendung. Dabei ist es auch möglich, dass der Behälter 2 rund ausgebildet ist, sodass die einzelnen Seitenwände 6 zu einer einzelnen Seitenwand verschmelzen. Andererseits sind auch weitere polygonale Ausbildungen, beispielsweise in Sechseckform, möglich. Weiter können Behälter mit Formen eingesetzt werden, die es erlauben, mehrere Gebinde nebeneinander anzuordnen.

Wie aus Fig. 2 ersichtlich, sind die Räder bzw. Roll- oder Gleitelemente 4 und ein kopfseitig am Deckel 5 vorgesehenes Griffelement 7 auf einer gemeinsamen vertikalen Achse angeordnet. Der durch die angebrachten Räder verursachte Höhenunterschied wird ausgeglichen, indem der Boden 3 nach unten bzw. zum Grund hin schräg abfallend ausgebildet ist und mit einer der Seitenwände 6 eine Kante 10 bildet, sodass letztlich der Behälter 2 waagrecht steht. Alternativ ist auch eine Ausbildung möglich, bei welcher der Boden 3 auf der dem Grund zugewandten Seite nicht abfallend, sondern waagrecht ausgebildet ist und ein oder mehrere grundseitig angebrachte Distanzstücke aufweist, welche den durch die Räder verursachten Höhenunterschied ausgleichen. Das Griffelement 7 kann dann beispielsweise auch in der Mitte des Deckels 5 angeordnet sein.

Wie aus Fig. 2 auch ersichtlich, sind in den Seitenwänden 6 des Behälters 2 zusätzliche Grifföffnungen 9 vorgesehen, die dann benötigt werden, wenn die Transportverpackung 1 beispielsweise über eine Stufe gehoben werden soll.

Ist die Transportverpackung 1 samt Inhalt zu bewegen, so ist es lediglich erforderlich, den Behälter 2 an dem in Fig. 2 und Fig. 3 ersichtlichen Griffelement 7 zu fassen, diesen leicht zu neigen, sodass die Kante 10 vom Grund abhebt, und schließlich entlang eines gewünschten Transportweges zu ziehen oder zu schieben.

Die in den Fig. 1 bis Fig. 3 dargestellte Transportverpackung 1 kann so gestaltet sein, dass diese bei Nichtgebrauch zusammenfaltbar bzw. zusammenklappbar ist. Der Boden 3 und der Deckel 5 sind dann ein- und/oder ausklappbar mit den Seitenwänden 6 verbunden.

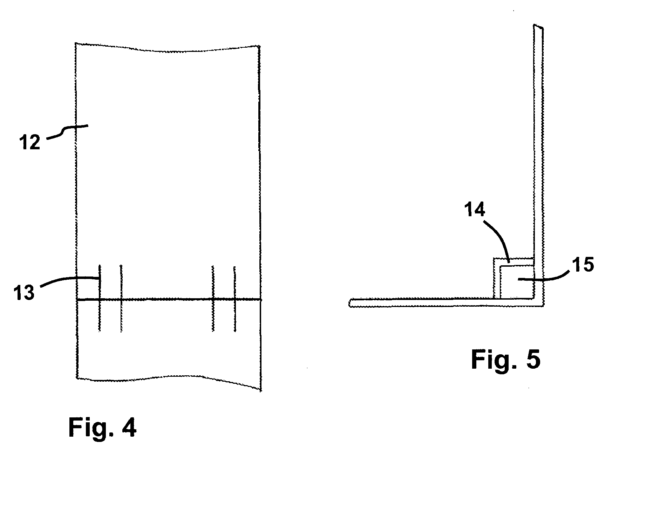

In Fig. 4 ist ein Teil eines doppelwandigen Kunststoffstücks mit dazwischen angeordneten Streben dargestellt, das durch entsprechendes Falten zu einem Behälter 2 führt. Das Kunststoffstück besteht beispielsweise aus extrudiertem Polypropylen, sogenanntes Hohlkammer-Polypropylen, und weist ein Gewicht von bis zu 3000 g/m², vorzugsweise bis zu 1500 g/m², insbesondere bis zu 900 g/m², auf. An einem Übergang von einem Bereich, der im Behälter 2 einen Teil des Bodens 3 bildet, zu einer Rückseite 12, welcher

Übergang in Fig. 4 durch einen horizontalen Strich dargestellt ist, sind Schlitze oder Perforierungen 13 vorgesehen. Diese Schlitze oder Perforierungen 13 erlauben es, wie aus Fig. 5 ersichtlich, bei einer Erstellung des Behälters 2 Aufnahmen 14 mit Öffnungen 15 auf einfache Weise zu erhalten, in welche Öffnungen 15 eine Achse für Räder eingeschoben werden kann. Die Achse kann diesbezüglich im Querschnitt so ausgebildet sein, dass diese passgenau in den Öffnungen 15 Platz findet. Die Achse ist dann drehfest angeordnet und kann seitlich zusätzlich gegen ein axiales Verschieben gesichert sein, beispielsweise durch am Behälter 2 seitlich befestigte Ösen, die wie die Achse vorzugsweise aus einem Stahl gebildet sind und gleichzeitig als Lager für die Achse dienen können. Die Achse weist dann an seitlichen Enden Einrastelemente auf, in welche Räder mit korrespondierenden Vorsprüngen eingesetzt werden können, sodass sich die Räder bei Bedarf drehen können. Durchsetzt die Achse zumindest 75 % einer Breite des Bodens 3, so wird eine besonders haltbare Transportvorrichtung 1 erhalten, insbesondere wenn die Achse aus einem Stahl besteht, die Räder hingegen aus einem Kunststoff. Die Achse kann insbesondere bei vorgesehenen Ösen auch länger als eine Breite des Behälters 2 ausgebildet sein, sodass die Räder in Draufsicht seitlich des Behälters 2 liegen.

Eine erfindungsgemäße Transportverpackung 1 kann insbesondere zum Transport von Flüssigkeitsbehältern eingesetzt werden. Möglich sind aber auch andere Einsatzzwecke. Beispielsweise kann eine erfindungsgemäße Transportverpackung 1 in Supermärkten beim Einkauf und gegebenenfalls anschließend beim Transport erworbener Waren verwendet werden.

## Patentansprüche

1. Leichtgewichtige Transportverpackung (1), zum Beispiel für mehrere, gegebenenfalls bereits zusammen verpackte Flüssigkeitsbehälter oder eine oder mehrere Sammeleinheiten, in welchen sich die Flüssigkeitsbehälter befinden, beispielsweise Bierkisten, wobei die Transportverpackung (1) einen Behälter (2) zum Aufnehmen der Flüssigkeitsbehälter, Sammeleinheiten oder von anderen Gegenständen aufweist, welcher einen Boden (3) und an diesem anschließende Seitenwände (6) umfasst, wobei der Behälter (2) an seinem Boden (3) angebrachte Roll- oder Gleitelemente (4) und im Bereich einer dem Boden (3) gegenüberliegenden Kopfseite zumindest ein Griffelement (7) aufweist, **dadurch gekennzeichnet, dass** der Boden (3) und die Seitenwände (6) aus einem oder mehreren doppelwandigen Kunststoffstücken mit zwischen deren Wänden verlaufenden Stegen bzw. Rippen gebildet sind, wobei ein Gewicht des oder der Kunststoffstücke bis zu 3000 g/m² beträgt.

2. Transportverpackung (1) nach Anspruch 1, **dadurch gekennzeichnet, dass** das Gewicht bis zu 1500 g/m², vorzugsweise bis zu 900 g/m², beträgt.

3. Transportverpackung (1) nach Anspruch 1 oder 2, **dadurch gekennzeichnet, dass** die Seitenwände (6) und der Boden (3) aus einem doppelwandigen Kunststoffstück mit dazwischen senkrecht zu den Wänden verlaufenden Stegen ausgebildet ist.

4. Transportverpackung (1) nach einem der Ansprüche 1 bis 3, **dadurch gekennzeichnet, dass** die Roll- oder Gleitelemente (4) an einer gemeinsamen Achse befestigt sind.

5. Transportverpackung (1) nach Anspruch 4, **dadurch gekennzeichnet, dass** die Achse im oder am Boden (3) gelagert ist.

6. Transportverpackung (1) nach einem der der Ansprüche 1 bis 5, **dadurch gekennzeichnet**, dass-die Seitenwände-(6) und der Boden (3) des Behälters (2) einteilig ausgebildet sind.

7. Transportverpackung (1) nach einem der Ansprüche 1 bis 6, **dadurch gekennzeichnet, dass** der Boden (3) zum Behälterinnern hin waagrecht, zum Untergrund hin jedoch schräg verlaufend ausgebildet ist und mit einer der Seitenwände (6) ein Kante (10) bildet, sodass eine Höhe der als Räder ausgebildeten und am der Kante (10) gegenüberliegenden Ende des Bodens (3) befestigten Roll- oder Gleitelemente (4) ausgeglichen ist und der Behälter (2) waagrecht steht.

8. Transportverpackung (1) nach einem der Ansprüche 1 bis 7, **dadurch gekennzeichnet, dass** der Boden (3) zum Behälterinnern und zum Grund hin waagrecht verläuft und am Boden (3) den in Form von Rädern ausgebildeten Roll- oder Gleitelementen (4) gegenüberliegend ein oder mehrere Distanzstücke vorgesehen sind, welche eine Höhe der Räder ausgleichen, sodass der Behälter (2) waagrecht steht.

9. Transportverpackung (1) nach einem der Ansprüche 1 bis 8, **dadurch gekennzeichnet, dass** der Behälter (2) zusammenfaltbar bzw. zusammenklappbar ist.

10. Transportverpackung (1) nach einem der Ansprüche 1 bis 9, **dadurch gekennzeichnet, dass** in den Seitenwänden (6) Grifföffnungen (9) vorgesehen sind.

11. Transportverpackung (1) nach einem der Ansprüche 1 bis 10, **dadurch gekennzeichnet, dass** die Seitenwände (6) Sichtfenster (8) aufweisen.

12. Transportverpackung (1) nach einem der Ansprüche 1 bis 11, **dadurch gekennzeichnet, dass** die Roll- und/oder Gleitelemente (4) als Räder ausgebildet sind und die Räder an einer gemeinsamen drehfesten Achse befestigt sind, die im Boden (3) gelagert ist.

13. Transportverpackung (1) nach Anspruch 12, **dadurch gekennzeichnet, dass** die Achse aus einem Stahl besteht.

14. Transportverpackung (1) nach Anspruch 12 oder 13, **dadurch gekennzeichnet, dass** die Achse länger als 75 % einer Breite des Behälters (2) ist. -

15. Befüllte, gegebenenfalls zusammen verpackte oder in einer oder mehreren Sammeleinheiten befindliche Getränkebehälter, welche von einer Transportverpackung (1) umgeben sind, **dadurch gekennzeichnet, dass** die Transportverpackung (1) nach einem der Ansprüche 1 bis 14 ausgebildet ist.

## Claims

1. A lightweight transport packaging (1), for example for several liquid containers potentially already packaged together, or one or several collecting units, in which the liquid containers are located, for example beer crates, wherein the transport packaging (1) exhibits a container (2) for accommodating the liquid containers, collecting units or other objects, which encompasses a floor (3) adjoined by lateral walls (6), wherein the container (2) has rolling or sliding elements (4) secured to its floor (3), and at least one hand grip element (7) in the area of a head side lying opposite the floor (3), **characterized in that** the floor (3) and lateral walls (6) are formed out of one or more dual-walled plastic pieces with webs or ribs running between their walls, wherein the weight of the plastic piece(s) measures up to 3000 g/m²_{.}

2. The lightweight transport packaging (1) according to claim 1, **characterized in that** the weight measures up to 1500 g/m², preferably up to 900 g/m²_{.}

3. The lightweight transport packaging (1) according to claim 1 or 2, **characterized in that** the lateral walls (6) and floor (3) consist of a dual-walled plastic piece with webs running between them, perpendicular to the walls.

4. The lightweight transport packaging (1) according to one of claims 1 to 3, **characterized in that** the rolling or sliding elements (4) are secured to a shared axle.

5. The lightweight transport packaging (1) according to claim 4, **characterized in that** the axle is mounted in or on the floor (3).

6. The lightweight transport packaging (1) according to one of claims 1 to 5, **characterized in that** the lateral walls (6) and floor (3) of the container (2) are comprised of a single piece.

7. The lightweight transport packaging (1) according to one of claims 1 to 6, **characterized in that** the floor (3) runs horizontal relative to the container interior, but is inclined toward the ground, and forms an edge (10) with one of the lateral walls (6), so that a height of the rolling or sliding elements (4) designed as wheels and attached to the end of the floor (3) lying opposite the edge (10) is balanced out, and the container (2) stands horizontal.

8. The lightweight transport packaging (1) according to one of claims 1 to 7, **characterized in that** the floor (3) runs horizontal relative to the container interior and toward the ground, and that one or more spacers are provided on the floor (3) opposite the rolling or sliding elements (4) designed as wheels, and balance out a height of the wheels, so that the container (2) stands horizontal.

9. The lightweight transport packaging (1) according to one of claims 1 to 8, **characterized in that** the container (2) is foldable or collapsible.

10. The lightweight transport packaging (1) according to one of claims 1 to 9, **characterized in that** hand grip openings (9) are provided in the lateral walls (6).

11. The lightweight transport packaging (1) according to one of claims 1 to 10, **characterized in that** the lateral walls (6) exhibit viewing windows (8).

12. The lightweight transport packaging (1) according to one of claims 1 to 11, **characterized in that** the rolling and/or sliding elements (4) are designed as wheels, and the wheels are secured to a shared, torque-proof axle mounted in the floor (3).

13. The lightweight transport packaging (1) according to claim 12, **characterized in that** the axle consists of steel.

14. The lightweight transport packaging (1) according to claim 12 or 13, **characterized in that** the axle is longer than 75% of the width of the container (2).

15. Filled beverage containers, if necessary packaged together or located in one or more collecting units, which are enveloped by a transport packaging (1), **characterized in that** the transport packaging (1) is designed according to one of claims 1 to 14.

## Revendications

1. Emballage de transport léger (1), par exemple pour plusieurs récipients à liquide éventuellement emballés ensemble ou encore une ou plusieurs unités de stockage, dans lesquelles se trouvent les récipients à liquide, par exemple des caisses de bière, dans lequel l'emballage de transport (1) comporte un récipient (2) pour la réception des récipients à liquide, des unités de stockage ou d'autres objets, lequel comprend un fond (3) et des parois latérales (6) reliées à celui-ci, dans lequel le récipient (2) comporte des éléments roulants ou coulissants (4) fixés à son fond (3) et au moins un élément de préhension (7) dans la région d'un côté supérieur opposé au fond (3), **caractérisé en ce que** le fond (3) et les parois latérales (6) sont formés à partir d'un ou de plusieurs morceaux de plastique à double paroi, avec des nervures ou des côtes s'étendant entre leurs parois, dans lequel un poids du ou des morceaux de plastique va jusqu'à 3000 g/m².

2. Emballage de transport (1) selon la revendication 1, **caractérisé en ce que** le poids va jusqu'à 1500 g/m2, de préférence jusqu'à 900 g/m2.

3. Emballage de transport (1) selon la revendication 1 ou 2, **caractérisé en ce que** les parois latérales (6) et le fond (3) sont constitués d'un morceau de plastique à double paroi, avec des nervures s'étendant perpendiculairement aux parois, entre celles-ci.

4. Emballage de transport (1) selon l'une des revendications 1 à 3, **caractérisé en ce que** les éléments roulants ou coulissants (4) sont fixés à un axe commun.

5. Emballage de transport (1) selon la revendication 4, **caractérisé en ce que** l'axe est monté dans ou sur le fond (3).

6. Emballage de transport (1) selon l'une des revendications 1 à 5, **caractérisé en ce que** les parois latérales (6) et le fond (3) du récipient (2) sont constitués d'une seule pièce.

7. Emballage de transport (1) selon l'une des revendications 1 à 6, **caractérisé en ce que** le fond (3) est conçu de manière à s'étendre horizontalement par rapport à l'intérieur du récipient, mais en biais par rapport au support, tout en formant une arête (10) avec l'une des parois latérales (6), de façon à compenser une hauteur des éléments roulants ou coulissants (4) conçus comme des roues et fixés à l'extrémité du fond (3) opposée à l'arête (10) et à ce que le récipient (2) soit placé horizontalement.

8. Emballage de transport (1) selon l'une des revendications 1 à 7, **caractérisé en ce que** le fond (3) s'étend horizontalement par rapport à l'intérieur du récipient et au sol, et une ou plusieurs pièces d'espacement sont prévues au fond (3), en face des éléments roulants ou coulissants (4) conçus sous forme de roues, lesquelles compensent une hauteur des roues, de manière à ce que le récipient (2) soit placé horizontalement.

9. Emballage de transport (1) selon l'une des revendications 1 à 8, **caractérisé en ce que** le récipient (2) peut être replié ou plié.

10. Emballage de transport (1) selon l'une des revendications 1 à 9, **caractérisé en ce que** des ouvertures de préhension (9) sont prévues dans les parois latérales (6).

11. Emballage de transport (1) selon l'une des revendications 1 à 10, **caractérisé en ce que** les parois latérales (6) comportent des fenêtres d'observation (8).

12. Emballage de transport (1) selon l'une des revendications 1 à 11, **caractérisé en ce que** les éléments roulants ou coulissants (4) sont conçus comme des roues et les roues sont fixées solidaires en rotation à un axe commun monté dans le fond (3).

13. Emballage de transport (1) selon la revendication 12, **caractérisé en ce que** l'axe est constitué d'acier.

14. Emballage de transport (1) selon la revendication 12 ou 13, **caractérisé en ce que** l'axe présente une longueur supérieure à 75% d'une largeur du récipient (2).

15. Récipients à boisson remplis, éventuellement emballés ensemble ou placés dans une ou plusieurs unités de stockage, lesquels sont enveloppés dans emballage de transport (1), **caractérisés en ce que** l'emballage de transport (1) est conçu selon l'une des revendications 1 à 14.
